# EUROPEAN PATENT APPLICATION

(11) **EP 1 469 119 A1**
(43) Date of publication of application: **20.10.2004**
(21) Application number: 04001884.8
(22) Date of filing: 29.01.2004
(51) Int. Cl.: D06F 39/08, D06F 35/00, D06F 39/00

(54) **Washing machine**

(30) Priority: 19.04.2003 KR 2003024910; 05.12.2003 KR 2003088210
(71) Applicant: LG Electronics Inc., Seoul (KR)
(72) Inventor: Woo, Kyung-Chul, Yangcheon-Gu Seoul (KR); Kim, Jin-Woong, Gwangmyeong Gyeonggi-Do (KR); Oh, Soo-Young, Yangcheon-Gu Seoul (KR); Jeon, Si-Moon, Seoul (KR); Kim, Na-Eun, Yeongdeungpo-Gu Seoul (KR)
(74) Representative: Schippan, Ralph, Dr.-Ing.

(57) **Abstract**

A washing machine comprises: an outer tub disposed in a casing for receiving washing water therein; an inner tub rotatably disposed in the outer tub for receiving laundry therein; and a plasma discharge unit for performing a plasma discharge on the washing water. According to this, a washing performance and a rinsing performance are enhanced and an amount of washing water is reduced.

## Description

### BACKGROUND OF THE INVENTION

### 1. Field of the Invention

The present invention relates to a washing machine, and more particularly, to a washing machine provided with a plasma discharge unit.

### 2. Description of the Conventional Art

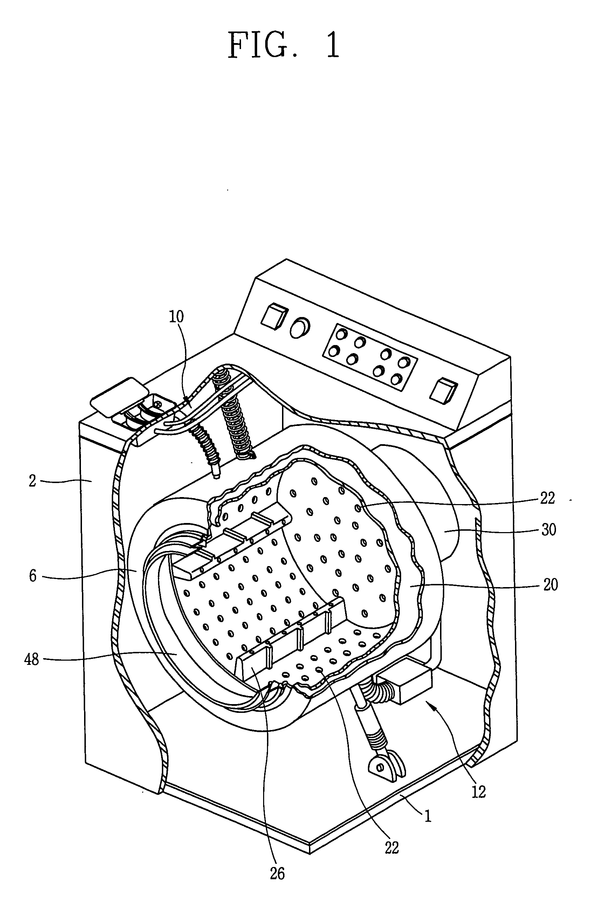

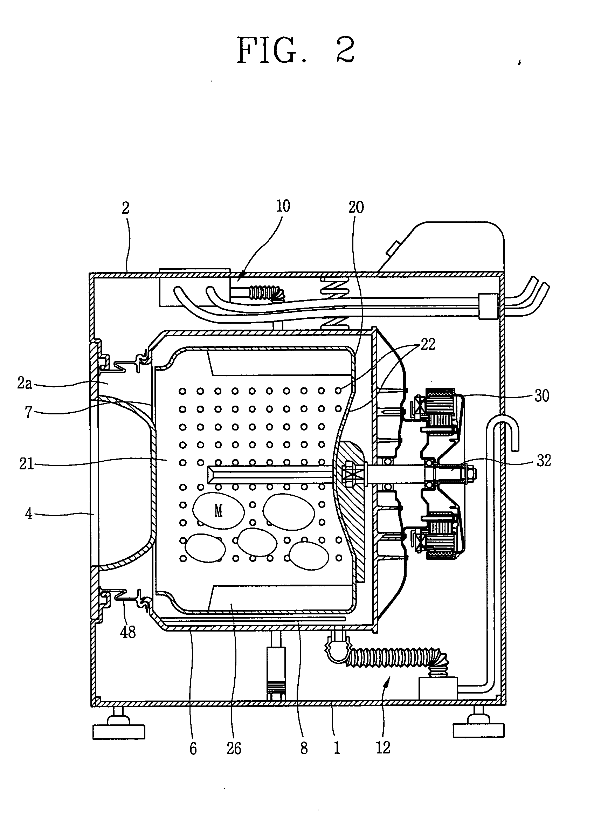

Figure 1 is a perspective view showing a washing machine by partially cutting in accordance with the conventional art, and Figure 2 is a section view showing the washing machine in accordance with the conventional art. As shown, the conventional washing machine comprises: a base 1; a casing 2 disposed at an upper side of the base 1 thus to form an appearance and provided with an opening 2a at a front surface thereof through which laundry M is introduced; a door 4 rotatably mounted at the front surface of the casing 2 for opening and closing the opening 2a; an outer tub 6 shock-absorbingly supported at an inner portion of the casing 2; a water supply unit 10 for supplying washing water into the outer tub 6; a drain unit 12 for draining the washing water inside the outer tub 6 to outside of the casing 2; an inner tub 20 rotatably disposed in the outer tub 6 for receiving the laundry M; a motor 30 for rotating the inner tub 20; and an electric heater 8 disposed at an inner lower portion of the outer tub 6 for heating washing water.

An inlet 7 for introducing the laundry M is formed at the front side of the outer tub 6, and a gasket 48 for preventing washing water W inside the outer tub 6 from leaking is disposed between the inlet of the outer tub 6 and the door 4.

An inlet 72 for introducing the laundry M is formed at the front side of the inner tub 20, and a plurality of holes 22 for introducing washing water inside the outer tub 6 are formed at an inner circumferential surface and a rear side surface of the inner tub 20. Also, a lift 26 for lifting laundry is provided at the inner circumferential surface of the inner tub 20.

Operation of the conventional washing machine will be explained as follows.

First, the laundry M is put into the inner tub 20 and the door 4 is closed thereby to operate the washing machine. According to this, washing water is supplied into the outer tub 6 by the water supply unit 10. The lower portion of the inner tub 20 is submerged by washing water which has been introduced through the holes 22.

When the motor 30 is driven and thus the inner tub 20 is rotated, the laundry M received in the inner tub 20 is lifted by the lift 26 and drops thereby to have a great operational force with washing water. According to this, a washing operation is performed. At this time, washing water is heated by the electric heater 8 and the operation of detergent becomes activated.

When the washing operation is completed, contaminated water inside the outer tub 6 is drained to outside of the washing machine through the drain unit 12 and a rinsing operation is performed.

That is, when washing water is supplied through the water supply unit 10 thus to be contained in the outer tub 6 and the motor 30 is driven thus to rotate the inner tub 20, the laundry M received in the inner tub 20 is lifted by the lift 26 and drops thereby to perform the rinsing operation. Herein, contaminated water is drained outwardly through the drain unit 12. The rinsing operation is repeatedly performed several times, so that foreign materials and detergent remnant are removed.

After the rinsing operation of the washing machine, a dehydrating operation for removing water of the laundry M is performed. That is, when the motor 30 rotates the inner tub 20 with a high speed, water inside the laundry M is centrifugally dehydrated thus to be drained thorough the holes 22 inside the inner tub 20 and thereby to be collected in the outer tub 6. Then, the water is drained outwardly through the drain unit 12.

According to the conventional washing machine, it takes a lot of time to heat washing water by the electric heater 8, and at the time of the rinsing operation, the rinsing operation has to be repeatedly performed several times in order to remove detergent remaining on the laundry thereby to have a long rinsing time and lots of water usage amount.

### SUMMARY OF THE INVENTION

Therefore, an object of the present invention is to provide a washing machine capable of increasing a washing operation and a rinsing operation and decreasing a water usage amount by heating and at the same time purifying washing water by a plasma discharge unit provided in the washing machine.

To achieve these and other advantages and in accordance with the purpose of the present invention, as embodied and broadly described herein, there is provided a washing machine comprising: an outer tub disposed in a casing for receiving washing water therein; an inner tub rotatably disposed in the outer tub for receiving laundry therein; and a plasma discharge unit for performing a plasma discharge in the washing water inside the outer tub.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
Figure 1 is a perspective view showing a washing machine by partially cutting in accordance with the conventional art;
Figure 2 is a section view showing the washing machine in accordance with the conventional art;
Figure 3 is a perspective view showing a washing machine according to one embodiment of the present invention by partially cutting;
Figure 4 is a section view showing the washing machine according to the first embodiment of the present invention;
Figure 5 is a section view showing a plasma discharge unit provided at the washing machine according to the first embodiment of the present invention;
Figure 6 is a graph showing a variation of a water temperature generated by an operation of the plasma discharge unit provided at the washing machine according to the first embodiment of the present invention;
Figure 7 is a graph showing a variation of a pH level generated by an operation of the plasma discharge unit provided at the washing machine according to the first embodiment of the present invention;
Figure 8 is a section view showing a plasma discharge unit provided at a washing machine according to a second embodiment of the present invention;
Figure 9 is a section view showing a washing machine according to a third embodiment of the present invention;
Figure 10 is a section view showing a plasma discharge unit provided at the washing machine according to the second embodiment of the present invention;
Figure 11 is a section view showing a washing machine according to a fourth embodiment of the present invention;
Figure 12 is a section view showing a plasma discharge unit provided at the washing machine according to the fourth embodiment of the present invention;
Figure 13 is a section view showing a washing machine according to a fifth embodiment of the present invention;
Figure 14 is a section view showing a plasma discharge unit provided at the washing machine according to the fifth embodiment of the present invention;
Figure 15 is a section view showing a washing machine according to a sixth embodiment of the present invention; and
Figure 16 is a section view showing a plasma discharge unit provided at the washing machine according to the sixth embodiment of the present invention.

### DETAILED DESCRIPTION OF THE PREFERRED EMBODIMENTS

Reference will now be made in detail to the preferred embodiments of the present invention, examples of which are illustrated in the accompanying drawings.

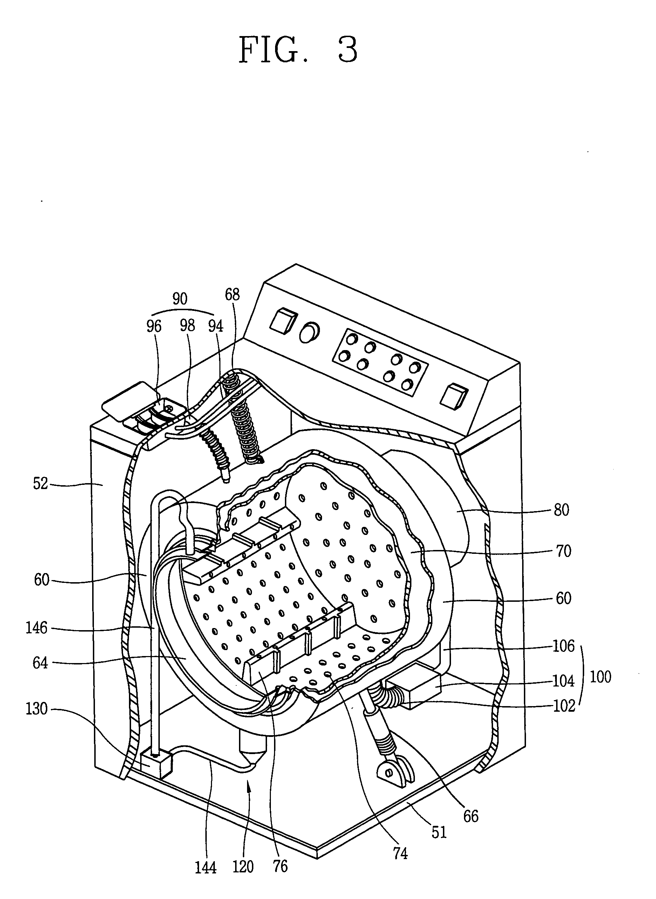

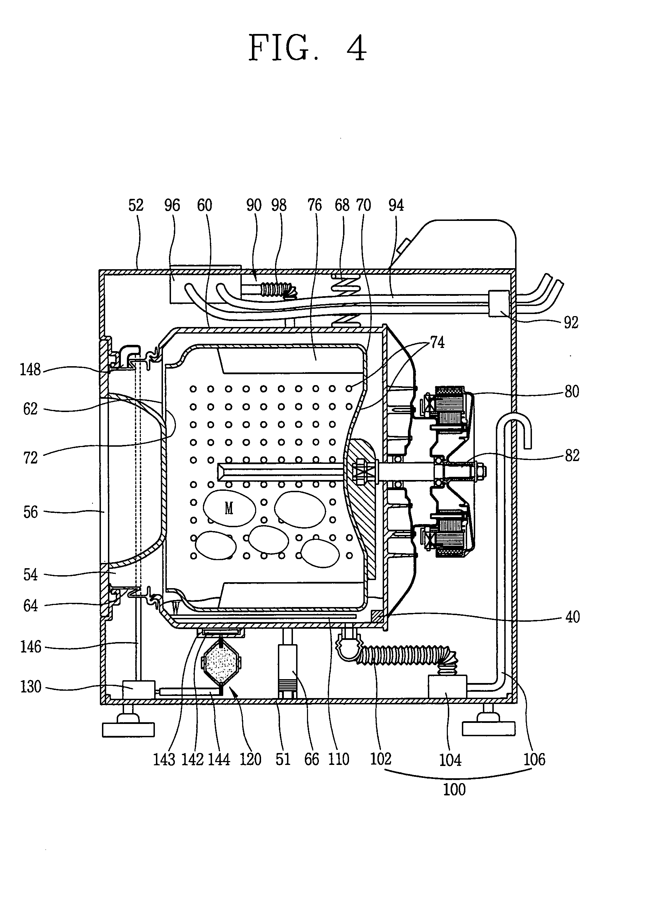

As shown in Figures 3 and 4, a washing machine according to the first embodiment of the present invention comprises: a base 51; a casing 52 disposed at an upper side of the base 51 thus to form a receiving space therein and provided with an opening 54 at a front surface thereof through which laundry M is introduced; a door 56 rotatably disposed at the opening 54 of the casing 52 for opening and closing the opening 54; an outer tub 60 suspended and supported by a supporting spring 68 and a damper 66 at an inner portion of the casing 52, for receiving washing water W therein; an inner tub 70 rotatably disposed in the outer tub 60 by a horizontally-arranged rotation shaft 82, for receiving the laundry M therein; a driving unit 80 connected to the rotation shaft 82 of the inner tub 70 at a rear side of the inner tub 70, for generating a rotational force to operate the inner tub 70; a water supply unit 90 for supplying washing water W into the outer tub 60; a drain unit 100 for draining the washing water W inside the outer tub 60 to outside of the washing machine; a heating unit 110 disposed at a lower side of the outer tub 60 for heating washing water W; a contamination degree sensor 40 disposed in the outer tub 60 for measuring a contamination degree of the washing water W; a plasma discharge unit 120 for performing a plasma discharge in the outer tub 60; and a control unit (not shown) for automatically controlling a rinsing time and a water supply amount according to a measurement result of the contamination degree sensor 40.

An inlet 62 for introducing laundry M is formed at the front side of the outer tub 60, and a gasket 64 for preventing the washing water W inside the outer tub 60 from leaking is disposed between the inlet 62 of the outer tub 60 and the door 56.

An inlet 72 for introducing the laundry M is formed at the front side of the inner tub 70, and a plurality of holes 74 for introducing washing water inside the outer tub 60 are formed at an inner circumferential surface and a rear side surface of the inner tub 70. Also, a lift 76 for lifting the laundry M is provided at the inner circumferential surface of the inner tub 70.

The driving unit 80 is composed of an electric motor directly connected to the rotation shaft 82 of the inner tub 70, and can be further provided with a belt-pulley mechanism for transmitting a driving force of the electric motor to the rotation shaft 82.

The water supply unit 90 includes: a water supply valve 92 connected to an external hose for controlling a supply of washing water; a guide duct 94 for guiding washing water which has passes through the water supply valve 92; a detergent box 96 having a passage of washing water supplied through the guide duct 94 for containing detergent; and a water supply duct 98 for supplying washing water which has passes through the detergent box 96 to the outer tub 60.

The drain unit 100 includes: a drain duct 102 connected to one side of the lower portion of the outer tub 60; a drain pump 104 for pumping washing water introduced into the drain duct 102; and a drain hose 106 for draining washing water which has passed through the drain pump 104 to outside of the washing machine.

The heating unit 110 is installed at the lower side of the outer tub 60 to be submerged by washing water, and is composed of an electric heater for heating washing water by an external power source.

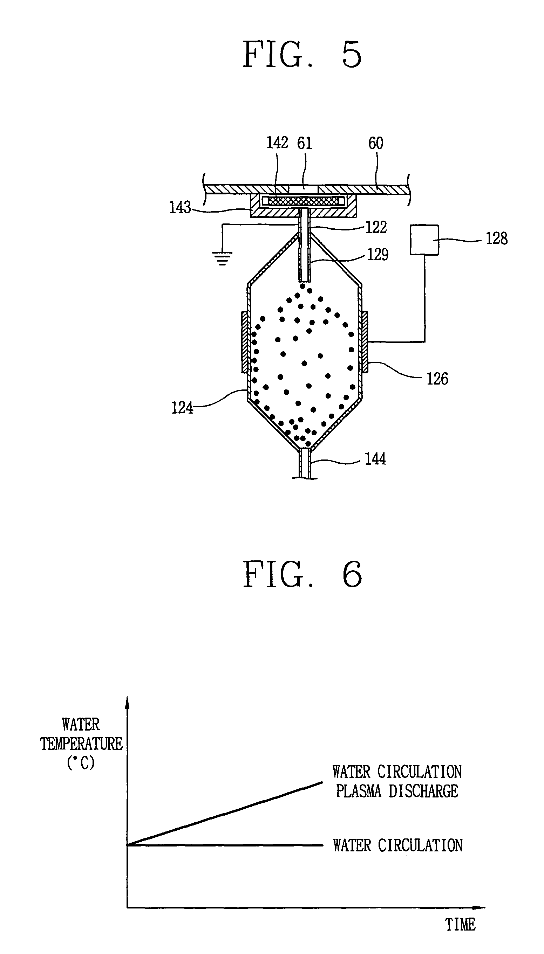

As shown in Figure 5, the plasma discharge unit 120 includes: an inflow passage 122 connected to a connection hole 61 formed at the lower side of the outer tub 60; a filter 142 mounted at a filter guide 143 disposed between the connection hole 61 and the inflow passage 122 for filtering foreign materials remaining at washing water introduced through the inflow passage 122; a discharge box 124 for receiving washing water introduced through the inflow passage 122 and having a space where a plasma discharge is performed; a spray nozzle 129 connected to the inflow passage 122 and disposed in the discharge box 124, for expandably spraying washing water introduced through the inflow passage 122 into the discharge box 124; a high voltage generator 128 disposed at one side of the discharge box 124; an electrode 126 disposed at a circumferential surface of the discharge box 124 and electrically connected to the high voltage generator 128; circulation ducts 144 and 146 for connecting a connection opening 148 formed at the upper side of the outer tub 60 and the discharge box 124 so that washing water which has passed through the discharge box 124 ca be re-circulated into the outer tub 60; and a circulation pump 130 disposed between the circulation ducts 144 and 146.

The discharge box 124 is formed of an insulating material, and the electrode 126 is attached to the outer side surface of the discharge box 124. The electrode 126 can be disposed at the inner side surface of the discharge box 124. The electrode 126 is formed of a metal material such as copper, and a high voltage of approximately 5~7KV is applied thereto from the high voltage generator 128. The inflow passage 122 and the spray nozzle 129 are preferably ground-connected.

Operation and effect of the washing machine according to the first embodiment of the present invention will be explained as follows.

First, washing water is received in the inner tub 70 and then the door 56 is closed. Under this state, if the washing machine is operated, washing water is supplied by the water supply unit 90 and thereby washing water is contained in the lower portion of the outer tub 60, the discharge box 126, and the circulation pump 130. Also, when the driving unit 80 is operated, the inner tub 70 is rotated and washing water and laundry inside the inner tub 70 are stirred thereby to perform a washing operation.

The circulation pump 130 and the high voltage generator 128 are driven, and washing water inside the inner tub 70 is introduced into the discharge box 124 through the inflow passage 122 and the spray nozzle 129. At this time, foreign materials included in the washing water are filtered by the filter 142, and the washing water introduced into the discharge box 124 is re-circulated to the outer tub 60 through the circulation ducts 144 and 146.

When a voltage of approximately 5∼7KV is applied to the electrode 126 from the high voltage generator 128, an electric field is formed between the electrode 126 and the inflow passage 122 and washing water sprayed into the discharge box 124 is influenced by a plasma discharge caused by the electrode 126. According to this, as shown in Figure 6, the washing water inside the discharge box 124 is gradually heated by an electric discharge, and by the plasma discharge, ultra violet and ozone are generated. When the washing water is heated, a solubility of detergent dissolved in washing water is increased and the detergent is activated thereby to accelerate a reaction with the laundry. Also, since ultra violet and ozone are generated by the plasma discharge, the washing operation for the laundry is smoothly performed.

At this time, the heating unit 110 heats washing water a lot faster, and thereby detergency of the laundry is much more increased.

The washing water heated by the plasma discharge unit 120 and the heating unit 110 during the washing operation of the washing machine is circulated into the outer tub 60 through the circulation ducts 144 and 146. At this time, the filter 142 purifies the circulating washing water.

When the washing operation of the washing machine is completed, the washing water inside the outer tub 60 is outwardly drained by the drain unit 100 and a rinsing operation of the washing machine is performed.

That is, when washing water is supplied into the outer tub 60 through the water supply unit 90 and the driving unit 80 is driven thus to rotate the inner tub 70, the laundry inside the inner tub 70 is stirred with washing water by the rotation of the inner tub 70 and a rinsing operation is performed.

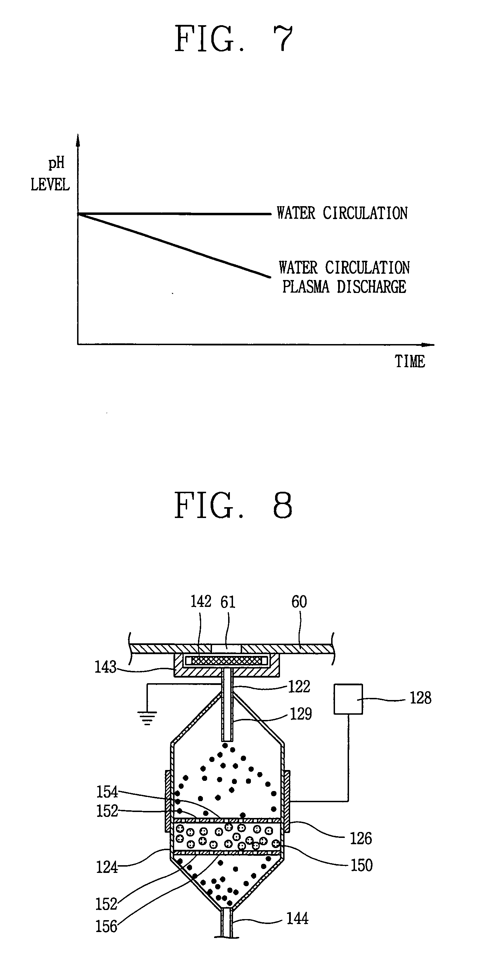

At this time, when the circulation pump 130 and the high voltage generator 128 are operated, plasma is discharged at the washing water by the electric field formed between the electrode 126 and the inflow passage 122. According to this, components of the detergent included in the washing water are neutralized by OH radicals generated by the plasma discharge and etc., and positive ions included in the washing water are changed into harmless materials having no polarity by ultra violet. Also, as shown in Figure 7, the pH level of the washing water is gradually decreased by the plasma discharge. The washing water is circulated to the outer tub 60 through the circulation ducts 144 and 146 and thereby is purified by the filter 142. At this time, the control unit controls a rinsing time, the number of times of rinsing, and a water supply amount on the basis of a pH value of the washing water obtained by the contamination degree sensor 40.

Since the washing water is neutralized and purified by the plasma discharge unit 120, the rinsing time, the number of times of rinsing, and the water supply amount are reduced.

When the rinsing operation of the washing machine is completed, the washing water inside the outer tub 60 is drained to outside of the washing machine by the drain unit 100 and a dehydrating operation of the washing machine is performed. That is, when the inner tub 70 is rotated with a high speed by the operation of the driving unit 80, water included in the laundry is exhausted to outside of the inner tub 70 through the holes 74 of the inner tub 70 by a centrifugal force, then is collected at the lower side of the outer tub 60, and then is drained to outside of the washing machine through the drain unit 100.

In the washing machine according to the first embodiment of the present invention, a plasma discharge is performed on washing water by the plasma discharge unit thereby to heat and purify washing water, to increase a washing performance by the heated washing water, and to increase a rinsing operation by the purified washing water.

Besides, since the washing water purified by the plasma discharge is pumped by the circulation pump and thus to be re-circulated into the outer tub, the number of times of rinsing and a water usage amount are reduced.

Figure 8 is a section view showing a plasma discharge unit provided at a washing machine according to a second embodiment of the present invention.

In the second embodiment of the present invention, a dielectric particle 150 for accelerating plasma discharge is mounted in the discharge box 125. That is, a pair of supporting members 154 and 156 provided with a plurality of holes 152 through which washing water passes are fixed to inside of the discharge box 124, and the dielectric particle 150 is contained between the supporting members 154 and 156.

Therefore, discharge is induced between the dielectric particle 150 and the electrode 126 thus to accelerate plasma discharge. According to this, since washing water is fast heated at the time of a washing operation, detergent becomes more activated thus to enhance a washing performance. Also, at the time of a rinsing operation, a pH level is greatly varied thus to increase a purifying force of washing water and to enhance a rinsing performance.

Operation and effect of the washing machine according to the second embodiment of the present invention is the same as the aforementioned first embodiment.

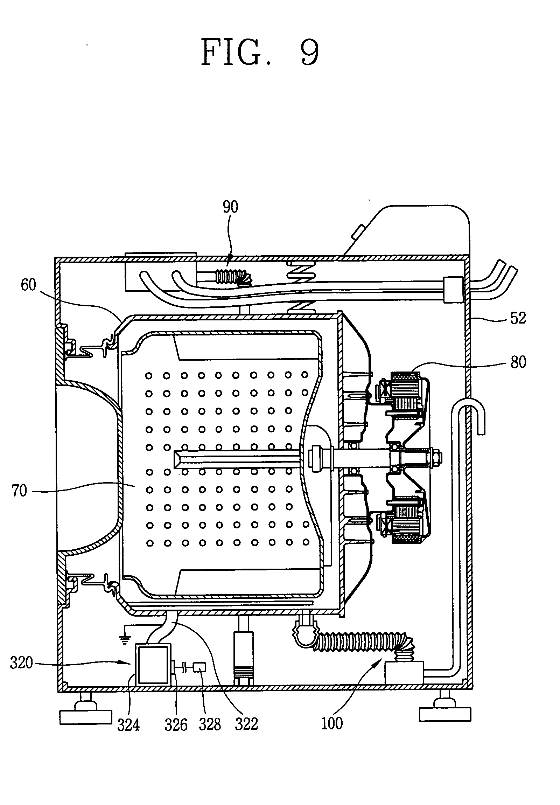

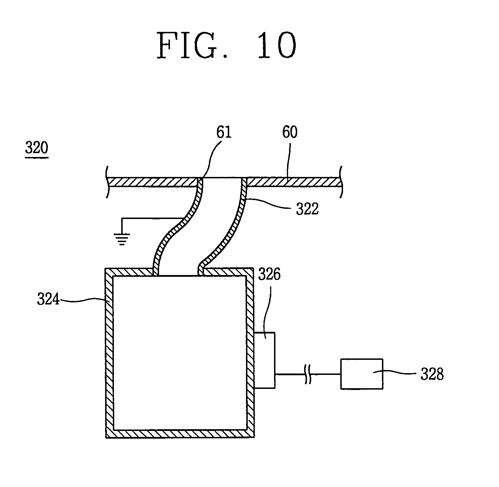

Hereinafter, a washing machine according to the third embodiment of the present invention will be explained with reference to Figures 9 and 10. Explanations for the same parts as the aforementioned embodiments will be omitted.

As shown in Figure 9, the washing machine according to the third embodiment of the present invention comprises: a casing 52 for forming a receiving space therein; an outer tub 60 disposed in the casing 52 for receiving washing water therein; an inner tub 70 disposed in the outer tub 60 for receiving laundry therein; a driving unit 80 disposed at a rear side of the inner tub 70 for generating a rotational force to operate the inner tub 70; a water supply unit 90 for supplying washing water into the outer tub 60; a drain unit 100 for draining the washing water inside the outer tub 60 outwardly; a plasma discharge unit 320 for performing a plasma discharge on washing water inside the outer tub 60.

As shown in Figure 10, the plasma discharge unit 320 includes: an inflow passage 322 connected to a connection hole 61 formed at the lower side of the outer tub 60; a discharge box 324 for receiving washing water introduced through the inflow passage 322 and having a space where a plasma discharge is performed; a high voltage generator 328 disposed at one side of the discharge box 324; and an electrode 326 disposed at one side surface of the discharge box 324 and electrically connected to the high voltage generator 328.

The discharge box 324 is formed of an insulating material, and the electrode 126 is formed of a metal material such as copper. A high voltage of approximately 5~7KV is applied from the high voltage generator 328 to the electrode 326. The inflow passage 322 is preferably ground-connected.

Under this construction, when a high voltage is applied to the electrode at the time of a washing operation, a charge is induced to the electrode and plasma discharge is performed inside the discharge box 324 by an electric potential difference between the electrode and the inflow passage 322. By this plasma discharge, ultra violet and ozone are generated and washing water is heated, thereby accelerating detergency of the washing water.

At the time of a rinsing operation, a pH level is great by detergent remaining on the laundry. However, the detergent is neutralized by OH radical generated by the plasma discharge and etc., and is changed into a harmless material by ultra violet.

Since the washing machine according to the third embodiment of the present invention is provided with the plasma discharge unit 320 therein, a washing performance and a rinsing performance can be enhanced and an amount of water used at the time of the rinsing operation can be reduced.

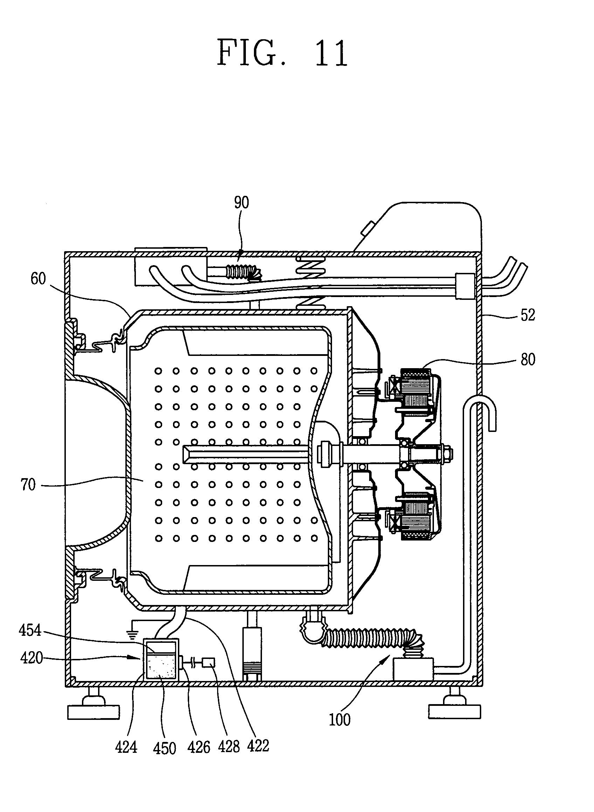

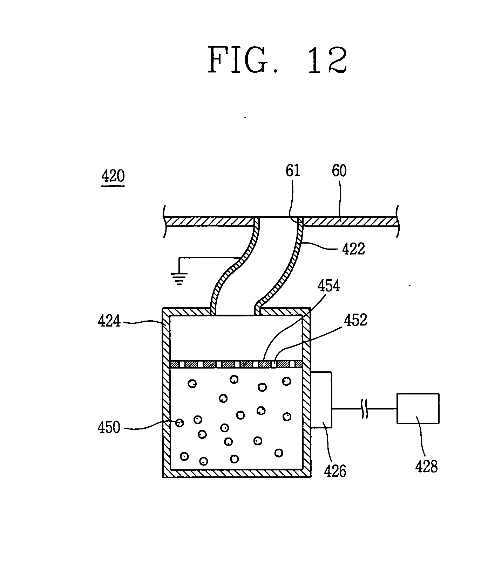

Hereinafter, a washing machine according to the fourth embodiment of the present invention will be explained with reference to Figures 11 and 12. Explanations for the same parts as the aforementioned embodiments will be omitted.

As shown in Figures 11 and 12, a plasma discharge unit 420 provided at the washing machine according to the fourth embodiment of the present invention includes: an inflow passage 422 connected to a connection hole 61 formed at the lower side of the outer tub 60; a discharge box 424 for receiving washing water introduced through the inflow passage 422 and having a space where a plasma discharge is performed; a supporting member 454 fixed to inside of the discharge box 424 and provided with a plurality of holes 452 through which washing water passes; a catalyst 450 disposed at a space formed by the supporting member 454 and the discharge box 424 for changing a pH level of washing water; a high voltage generator 428 disposed at one side of the discharge box 424; and an electrode 426 disposed at one side surface of the discharge box 324 and electrically connected to the high voltage generator 428.

As the catalyst 450, γ-Al₂O₃, TiO₂, ZrO₃, glass pellet, and etc. are used. In case that γ-Al₂O₃, ZrO₃, and glass pellet are used as the catalyst, the pH level of washing water is enhanced at the time of a plasma discharge. Also, in case that TiO₂ is used as the catalyst, the pH level of washing water is lowered at the time of a plasma discharge. Said materials can be selectively used according to the purposes.

When a high voltage is applied to the electrode at the time of a washing operation of the washing machine, a charge is induced to the electrode and a plasma discharge is performed inside the discharge box 424 by an electric potential difference between the electrode 426 and the inflow passage 422. By this plasma discharge, ultra violet and ozone are generated and washing water is heated, thereby accelerating detergency of the washing water. Herein, in case that γ-Al₂O₃, ZrO₃, and glass pellet are used as the catalyst 450, the pH level of washing water is enhanced thereby to accelerate the washing operation more and more.

Meanwhile, at the time of a rinsing operation, the pH level of the washing water is great by detergent remaining on the laundry and etc., but OH radical generated by the plasma discharge and etc. neutralize the washing water and ultra violet changes the washing water into a harmless material. Herein, when TiO₂ is used as the catalyst 450, the pH level of the washing water is lowered thereby to accelerate the neutralization of the washing water.

Since the washing machine according to the fourth embodiment of the present invention is provided with the plasma discharge unit 420 therein, a washing performance and a rinsing performance can be enhanced. Also, since the catalyst 450 for accelerating the variation of the pH level is provided in the plasma discharge unit 420, the washing performance and the rinsing performance can be more increased.

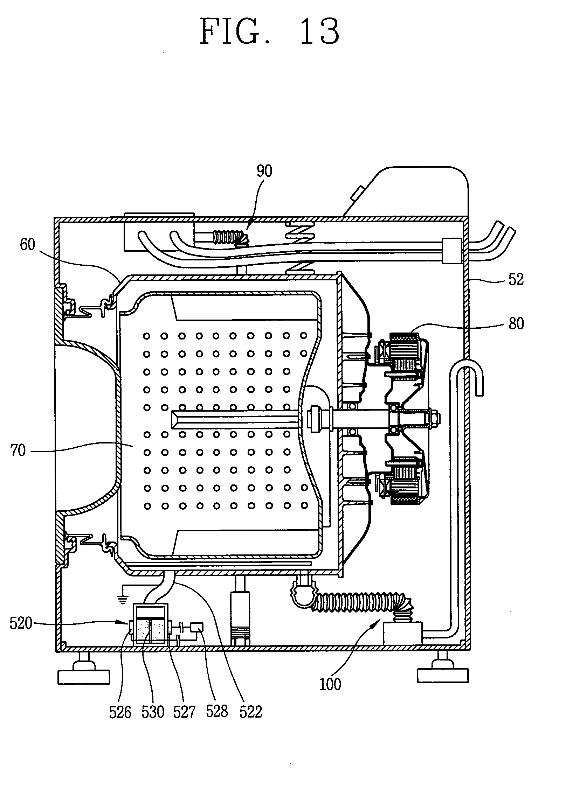

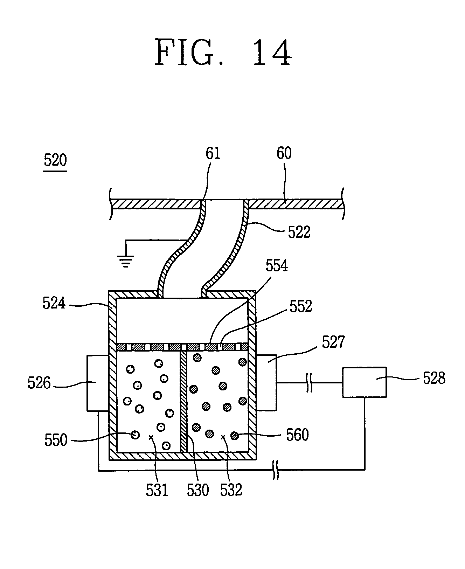

Hereinafter, a washing machine according to the fifth embodiment of the present invention will be explained with reference to Figures 13 and 14. Explanations for the same parts as the aforementioned embodiments will be omitted.

A plasma discharge unit 520 provided at the washing machine according to the fifth embodiment of the present invention includes: an inflow passage 522 connected to a connection hole 61 formed at the lower side of the outer tub 60; a discharge box 524 for receiving washing water introduced through the inflow passage 522 and having a space where a plasma discharge is performed; a supporting member 554 fixed to inside of the discharge box 524 and provided with a plurality of holes 552 through which washing water passes; a partition wall 530 for separating a space formed by the supporting member 454 and the discharge box 424 into a first space 531 and a second space 532; first and second catalysts 550 and 560 respectively disposed at the first and second spaces 531 and 532 for changing a pH level of washing water at the time of a plasma discharge; a high voltage generator 328 disposed at one side of the discharge box 324; and first and second electrodes 526 and 528 electrically connected to the high voltage generator 528 and respectively disposed to be adjacent to the first and second spaces 531 and 532.

Whereas the first catalyst 550 is formed of a material for enhancing the pH level of washing water at the time of a plasma discharge, the second catalyst 560 is formed of a material for lowering the pH level of washing water at the time of a plasma discharge.

Under this construction, when a high voltage is applied to the first electrode 526 from the high voltage generator 528 at the time of a washing operation of the washing machine, a plasma discharge is performed on washing water inside the first space 531 where the first catalyst 550 is received, ultra violet and ozone are generated, and washing water is heated. At this time, the pH level of the washing water is increased by the first catalyst 550. According to this, detergent included in the washing water is activated thus to enhance a washing performance for the laundry.

Meanwhile, when a high voltage is applied to the second electrode 527 from the high voltage generator 528 at the time of a rinsing operation, a plasma discharge is performed on washing water inside the second space 532 where the second catalyst 560 is received. At this time, the pH level of the washing water is decreased by the second catalyst 560. According to this, the neutralization of the washing water is accelerated by the second catalyst 560 thereby to enhance a rinsing performance and to reduce an amount of water required at the time of the rinsing operation.

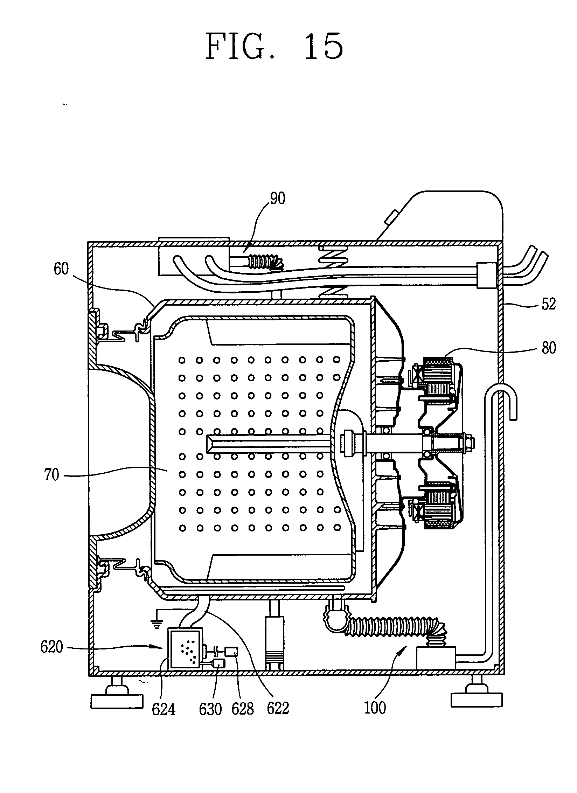

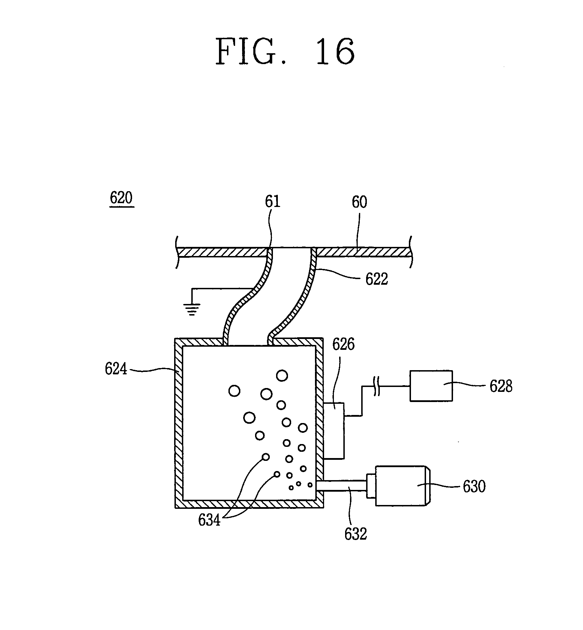

Hereinafter, a washing machine according to the sixth embodiment of the present invention will be explained with reference to Figures 15 and 16. Explanations for the same parts as the aforementioned embodiments will be omitted.

A plasma discharge unit 620 provided at the washing machine according to the sixth embodiment of the present invention includes: an inflow passage 622 connected to a connection hole 61 formed at the lower side of the outer tub 60; a discharge box 624 for receiving washing water introduced through the inflow passage 622 and having a space where a plasma discharge is performed; a high voltage generator 628 disposed at one side of the discharge box 624; an electrodes 626 electrically connected to the high voltage generator 628; and an air supply unit 630 connected to the discharge box 624 by a connection pipe 632 for supplying air 634 into the discharge box 624.

Under this construction, when a high voltage is applied to the electrode 626 at the time of a washing operation and a rinsing operation of the washing machine, water inside the discharge box 624 is plasma-discharged. At the same time, the air 634 is injected into the discharge box 624 by an operation of an air pump 630, and oxygen in the air 634 supplied to the discharge box 624 is ozonized by the plasma discharge.

Since the washing machine according to the sixth embodiment of the present invention is provided with the air pump 630 for supplying the air 634 to the plasma discharge unit 620, an amount of ozone is greatly increased thereby to accelerate a washing operation for the laundry.

The washing machine according to the present invention is provided with the plasma discharge unit, thereby enhancing the washing performance and the rinsing performance, reducing time for washing and rinsing the laundry, and reducing an amount of water usage amount. Main parts aforementioned in each embodiment of the present invention can be applied to all the aforementioned embodiments, and the plasma discharge unit of the present invention can be applied to various kinds of washing machines as well as the washing machines of the aforementioned embodiments.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

## Claims

1. A washing machine comprising:
an outer tub disposed in a casing for receiving washing water therein;
an inner tub rotatably disposed in the outer tub for receiving laundry therein; and
a plasma discharge unit for performing a plasma discharge on the washing water.

2. The washing machine of claim 1, wherein the plasma discharge unit includes:
an inflow passage connected to the outer tub for introducing washing water inside the outer tub;
a discharge box for receiving washing water introduced through the inflow passage and having a space where a plasma discharge is performed;
an electrode disposed at the discharge box; and
a high voltage generator electrically connected to the electrode for applying a voltage to the electrode.

3. The washing machine of claim 2, wherein a filter for filtering washing water is installed at the inflow passage.

4. The washing machine of claim 2, further comprising a circulation unit for re-circulating washing water inside the discharge box into the outer tub.

5. The washing machine of claim 4, wherein the circulation unit includes:
a circulation duct of which one end is connected to the discharge box and another end is connected to the outer tub; and
a circulation pump disposed at the circulation duct for pumping washing water.

6. The washing machine of claim 2, further comprising a spray nozzle connected to the inflow passage and disposed in the discharge box, for expandably spraying washing water introduced through the inflow passage into the discharge box.

7. The washing machine of claim 2, wherein a dielectric particle for accelerating a plasma discharge is disposed in the discharge box.

8. The washing machine of claim 2, further comprising a catalyst for changing a pH level of washing water at the time of a plasma discharge in the discharge box.

9. The washing machine of claim 8, wherein at least one of γ-Al₂O₃, TiO₂, ZrO₃, glass pellet, and etc. is used as the catalyst.

10. The washing machine of claim 8, wherein the catalyst is TiO₂

11. The washing machine of claim 2, further comprising a contamination degree sensor for detecting a contamination degree of washing water is disposed in the outer tub.

12. The washing machine of claim 2, further comprising an air supply unit for supplying air into the discharge box.

13. The washing machine of claim 2, wherein the discharge box is divided into a first space and a second space, the electrode is composed of a first electrode disposed to be adjacent to the first space and a second electrode disposed to be adjacent to the second space, and a first catalyst for increasing a pH level of washing water at the time of a plasma discharge is disposed in the first space and a second catalyst for decreasing a pH level of washing water at the time of a plasma discharge is disposed in the second space.

14. The washing machine of claim 13, wherein at least one of γ-Al₂O₃, ZrO₃, and glass pellet is used as the catalyst.

15. The washing machine of claim 13, wherein the second catalyst is TiO₂.

16. The washing machine of claim 13, further comprising an air supply unit for supplying air into the discharge box.

17. The washing machine of claim 13, further comprising a circulation unit for re-circulating washing water inside the discharge box into the outer tub.

18. The washing machine of claim 17, wherein the circulation unit includes:
a circulation duct of which one end is connected to the discharge box and another end is connected to the outer tub; and
a circulation pump connected to the circulation duct for pumping the washing water.

19. The washing machine of claim 13, wherein a dielectric particle for accelerating a plasma discharge is disposed in the discharge box.

20. The washing machine of claim 13, wherein a filter for filtering washing water is disposed at the inflow passage.

21. The washing machine of claim 13, further comprising a contamination degree sensor for detecting a contamination degree of washing water in the outer tub.
